Europäisches Patentamt

European Patent Office

Office européen des brevets

(19)

(11) Veröffentlichungsnummer: **0 061 758**
**B1**

(12) # EUROPÄISCHE PATENTSCHRIFT

(45) Veröffentlichungstag der Patentschrift:
26.02.86

(51) Int. Cl.⁴: **H 01 J 61/30**

(21) Anmeldenummer: 82102636.6

(22) Anmeldetag: 29.03.82

(54) Quecksilberdampf-Niederdruckentladungslampe und Verfahren zur Herstellung.

(30) Priorität: 31.03.81 DE 3112878

(43) Veröffentlichungstag der Anmeldung:
06.10.82 Patentblatt 82/40

(45) Bekanntmachung des Hinweises auf die Patenterteilung:
26.02.86 Patentblatt 86/9

(84) Benannte Vertragsstaaten:
DE FR GB IT

(56) Entgegenhaltungen:
DE - A - 3 005 017
DE - A - 3 005 052
GB - A - 2 023 924
US - A - 3 646 383

(73) Patentinhaber: Patent-Treuhand-Gesellschaft für
elektrische Glühlampen mbH, Hellabrunner Strasse 1,
D-8000 München 90 (DE)

(72) Erfinder: Albrecht, Wolfgang, Am Pfingstberg 36,
D-1000 Berlin (DE)
Erfinder: Hofmann, Dieter, Dr., Behringerstrasse 23,
D-8900 Augsburg (DE)
Erfinder: Klein, Lutz, Lindenstrasse 5, D-8911 Scheuring
(DE)
Erfinder: Panofski, Ernst, Waxensteinstrasse 70b,
D-8900 Augsburg (DE)

## Beschreibung

Die Erfindung betrifft eine Quecksilberdampf-Niederdruckentladungslampe mit einem Entladungsgefäß aus einem einstückigen, einfach oder mehrfach gebogenen Glasrohr, das aus mehreren geraden, parallel zueinander verlaufenden Längsrohrabschnitten und mindestens einem einzelne Längsrohrabschnitte verbindenden Querrohrabschnitt besteht, wobei die beiden äußeren Enden des Entladungsrohres abgedichtet sind und jeweils Elektrodeneinschmelzungen aufweisen.

Mit einem derartig gebogenen Entladungsgefäß läßt sich eine relativ kompakte Quecksilberdampf-Niederdruckentladungslampe erhalten. Dabei können die abgedichteten, äußeren Enden des Entladungsrohres mit einem Sockel versehen sein, der den Einsatz der Lampe in eine geeignete Leuchte ermöglicht.

Es sind sowohl Niederdruckentladungslampen bekannt, bei denen das rohrförmige Entladungsgefäß einfach, U-förmig, gebogen ist (z.B. aus DE-PS 830 219, JP-GM 36-27 470, DE-OS 28 35 183) als auch solche, bei denen das Entladungsrohr mehrfach gebogen bzw. gefaltet ist (z.B. aus DE-OS 29 42 846, DE-OS 30 05 017). Bei einigen Lampenkonstruktionen ist das gebogene Entladungsgefäß noch von einem Außenkolben umgeben.

Allen diesen bekannten Lampen ist gemeinsam, daß die einzelnen Biegungen des Entladungsrohres - zwischen den Längsrohrabschnitten und den jeweiligen Querrohrabschnitten - än den nach außen gewandten Rohrflächen in einem gleichmäßigen, sanften Bogen mit relativ großem Biegeradius verlaufen, wobei der Querschnitt des Entladungsrohres über die einzelnen Rohrabschnitte (einschließlich der Übergänge) im wesentlichen gleichbleibt. Dabei verläuft auch die äußere Mantelinie der jeweiligen Querrohrabschnitte bis in die Übergänge zu den Längsrohrabschnitten bogenförmig gekrümmt.

Bei derartigen Lampen, vor allem in kompakter Ausführungsform, kann es zu problemen hinsichtlich der Einhaltung des optimalen Quecksilberdampfdruckes im Entladungsgefäß kommen. Dieser ist bekanntlich maß-gebend für eine optimale Umwandlung der aufgenommenen elektrischen Leistung in Strahlungsleistung, die von der Entladung emittiert wird, und richtet sich nach der kältesten Stelle der Gefäßwand. Diese befindet sich bei den beschriebenen Lampen zumeist an den U-förmig gebogenen Querrohrabschnitten, die von den heißeren Elektrodenenden am weitesten entfernt sind. Insbesondere bei den kompakten Lampenkonstruktionen, evtl. noch mit einem Außenkolben, ist die sich normal in den bogenförmigen Querrohrabschnitten einstellende Wandtemperatur (diese bleibt über den jeweiligen Querrohrabschnitt annähernd gleich), zu hoch und es werden künstliche kalte Stellen an oder in der Nähe dieser Rohrabschnitte geschaffen. - So wird z.B. bei einer Lampe mit dreifach U-förmig gebogenem Entladungsrohr und Außenkolben (DE-OS 29 42 846) vorgeschlagen, an einem der Querrohrabschnitte eine Ausstülpung zu schaffen, die durch einen quer zu den Längsrohrabschnitten verlaufenden plattenförmigen Körper (z.B. aus Glas) ragt, der die Ausstülpung auf verhältnismäßig niedriger Temperatur hält.

Des weiteren wird auch eine Quecksilberdampf-Niederdruckentladungslampe vorgeschlagen, bei der mehrere parallel zueinander angeordnete, gerade rohrförmige Teile jeweils durch quer zu diesen Teilen verlaufende, rohrförmige Kopplungsteile verbunden sind (DE-OS 30 11 382). Diese Entladungsgefäße werden aus einzelnen ursprünglich nicht zusammenhängenden Rohrteilen gefertigt, wobei die Kopplungsteile kleineren Durchmesser haben als die Längsrohrteile. Die rohrförmigen Kopplungsteile verlaufen in einem gewissen Abstand von den jeweiligen benachbarten Enden der Längsrohrteile, wodurch die Entladung diese abgeschlossenen Rohrenden nicht erreicht, so daß diese die kältesten Stellen des Entladungsgefäßes bilden.

Der Erfindung liegt die Aufgabe zugrunde, eine kompakte Quecksilberdampf-Niederdruckentladungslampe zu schaffen, bei der das Entladungsgefäß aus einem einzigen einfach oder mehrfach gebogenen Rohrteil gebildet ist, wobei sich in Verbindung mit einem vorteilhaften Herstellungsverfahren die notwendigen kalten Stellen auf einfache Art ergeben. Daneben soll auch die Ausgestaltung der die kalten Stellen bildenden Gefäßteile möglichst einfach sein.

Die Quecksilberdampf-Niederdruckentladungslampe mit den im Oberbegriff des Hauptanspruchs genannten Merkmalen ist erfindungsgemäß dadurch gekennzeichnet, daß die äußere Mantellinie $M_Q$ der einzelnen Querrohrabschnitte gerade verläuft, daß der Durchmesser $D_{LQ}$ in den Rohrbiegungen an den Übergängen zwischen den Längsrohrabschnitten und den jeweiligen Querrohrabschnitten größer ist als der Durchmesser $D_Q$ der einzelnen Querrohrabschnitte in deren Mitte, und daß der Durchmesser $D_Q$ der einzelnen Querrohrabschnitte gleich oder größer ist als der Durchmesser $D_L$ der Längsrohrabschnitte, wobei die Durchmesser $D_{LQ}$, $D_Q$, $D_L$ in der Ebene liegen, die von den äußeren Mantellinien $M_L$ der durch den jeweiligen Querrohrabschnitt verbundenen Längsrohrabschnitte aufgespannt ist (mit $D_L$, $D_Q$ und $D_{LQ}$ sind die Außendurchmesser der jeweiligen Rohrabschnitte gemeint). Vorzugsweise ist die äußere Mantellinie $M_Q$ der einzelnen Querrohrabschnitte im wesentlichen senkrecht zu den äußeren Mantellinien $M_L$ der zugehörigen Längsrohrabschnitte ausgerichtet.

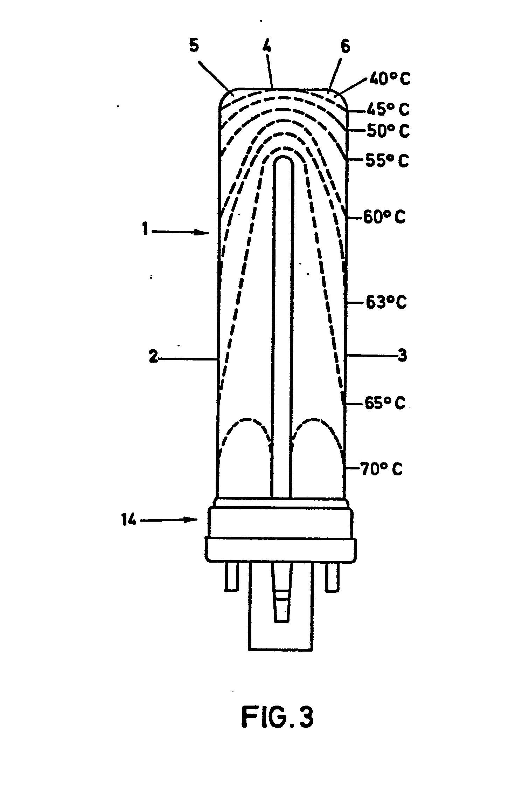

Hierdurch ergeben sich in den beiden annähernd rechtwinkligen Rohrbiegungen die für einen optimalen Lampenbetrieb gewunschten kalten Stellen. Diese erreichen, wie das Temperaturprofil der Figur 3 zeigt, etwa eine Temperatur von 40 °C. Sowohl in den weiteren Teilen der Längsrohrabschnitte als auch zur Mitte der Querrohrabschnitte hin stellen sich höhere Temperaturwerte ein. Um die kältesten Stellen an den Rohrbiegungen besonders wirkungsvoll zu gestalten, können diese zusätzlich mit einer Beschichtung versehen sein, die die Wärme im Temperaturbereich größer als 35 °C besser als das Glasmaterial des Entladungsgefäßes abstrahlt. Eine andere Möglichkeit besteht darin, die Querrohrabschnitte an der nach außen gewandten Mantelfläche (an der äuße-ren Mantellinie $M_Q$) in der Mitte mit einer Delle zu versehen.

Bei einer schräg verlaufenden (aber ebenfalls geraden) äußeren Mantellinie $M_Q$ (diese bildet dann mit den äußeren Mantellinien $M_L$ der zugehörigen Längsrohrabschnitte jeweils einen Winkel kleiner als 90° und einen Winkel größer als 90°) ergibt sich an der Rohrbiegung mit dem spitzen Winkel die den Quecksilberdampfdruck bestimmende kälteste Stelle.

Es hat sich als günstig erwiesen, den Durchmesser $D_Q$ der Querrohrabschnitte und den Durchmesser $D_L$ der Längsrohrabschnitte so aufeinander abzustimmen, daß das Verhältnis von $D_Q/D_L$ 1,1 bis 1,3 beträgt. Dabei sollte auch der Durchmesser $D_{LQ}$ an den Rohrübergängen (die Mantellinien $M_Q$ und $M_L$ sind dort aus verfahrenstechnischen Gründen schwach gekrümmt), so gewählt sein, daß sich ein Verhältnis von $D_{LQ}/D_Q$ von etwa 1,2 ergibt. Der lichte Abstand d zwischen benachbarten, durch einen Querrohrabschnitt verbundenen Längsrohrabschnitten ist vorzugsweise gleich oder kleiner als der halbe Durchmesser $D_L$ dieser Rohrabschnitte. Das z.B. für ein einfach gebogenes Entladungsgefäß verwendete Glasrohr hat vorzugsweise einen Außendurchmesser $D_L$ von etwa 12 mm; der dabei gewählte Abstand d zwischen den beiden parallel verlaufenden Längsrohren ist kleiner als 6 mm.

Mit den erfindungsgemäßen Merkmalen läßt sich sowohl ein einfach gebogenes, U-förmiges Entladungsgefäß als auch ein mehrfach gebogenes Entladungsgefäß herstellen. Bevorzugte Ausführungsformen sind in den Figuren la, b und 2a, b wiedergegeben. Die Innenwandung des jeweiligen Entladungsrohres ist vorteilhaft mit einem Leuchtstoff beschichtet, z.B. einem üblichen Dreibandenleuchtstoff. Dabei kann zwischen der Entladungsgefäßwand und der Leuchtstoffbeschichtung noch eine Schutzschicht, z.B. aus Siliziumdioxid, vorhanden sein. Des weiteren sind die äußeren Enden des rohrförmigen Entladungsge-fäßes mit Quetschdichtungen versehen, die bei der fertigen Lampe von einem Sockelkörper umgeben sind.

Für die Herstellung derartiger Entladungsgefäße hat sich der folgende Verfahrensablauf bewährt. Ein zunächst noch gerades Glasrohr wird erwärmt; insbesondere wird ein Mittelteil des Rohres auf Erweichungstemperatur gebracht. Anschließend werden die sich seitlich von dem betreffenden Mittelteil erstreckenden Rohrteile gegeneinandergebogen, bis diese (Längsrohrabschnitte) parallel zueinander ausgerichtet sind. Dann wird der U-förmig gebogene Teil des Rohres (im wesentlichen der Querrohrabschnitt mit Übergang zu den Längsrohrabschnitten) in eine Form eingeführt, wobei gleichzeitig über die Rohrenden in das Rohr Gas (auch Luft) eingeblasen wird. Dieser Vorgang ist der wesentliche Teil des Verfahrens, man kann ihn als "Formblasen" bezeichnen. Die Form ist dabei derart ausgebildet, daß sich ein Entladungsgefäß gemäß den Ansprüchen 1 bis 6 ergibt. Ggf. können derart noch weitere Teile des Rohres nach entsprechender Erwärmung gebogen und "Formgeblasen" werden. Anschließend erfolgt das Beschichten der Innenoberfläche des Rohres mit Leuchtstoff, ggf. nach vorherigem Aufbringen einer Schutzschicht, z.B. aus Siliziumdioxid. Nach der Leuchtstoffbeschichtung wird jeweils ein Elektrodensystem, bestehend aus zwei Stromzuführungsteilen und der daran gehalterten Glühwendel, in die äußeren Rohrenden eingeführt. Des weiteren wird ggf. an einem oder beiden Rohrende(n) auch ein Pumprohr eingeführt. Anschließend erfolgt bei den auf Erweichungstemperatur gebrachten Rohrenden ein Quetschdichten um die Elektrodenzuführungen und das ggf. vorhandene Pumprohr. Im weiteren wird dann wie üblich das Entladungsgefäß (ggf. über das bzw. die Pumprohr(e)) vakuumgepumpt, mit Edelgas gespült und mit Quecksilber sowie einem Edelgas als Zündgas gefüllt.

Die Erfindung ist anhand der folgenden Figuren, die vorteilhafte Ausführungsbeispiele wiedergeben, näher erläutert.

Figur 1a ist eine schematisierte Schnittdarstellung einer ungesockelten Niederdruck-Entladungslampe mit einfach gebogenem Entladungsrohr;

Figur 1b ist die Seitenansicht einer Niederdruck-Entladungslampe nach Figur la mit gesockelten Enden;

Figur 2a ist die Seitenansicht einer gesockelten Niederdruck-Entladungslampe mit mehrfach gebogenem Entladungsrohr;

Figur 2b ist eine weitere Seitenansicht der gesockelten Niederdruck-Entladungslampe nach Figur 2a;

Figur 3 zeigt das Temperaturprofil einer Niederdruck-Entladungslampe nach Figur1a bzw ·1b.

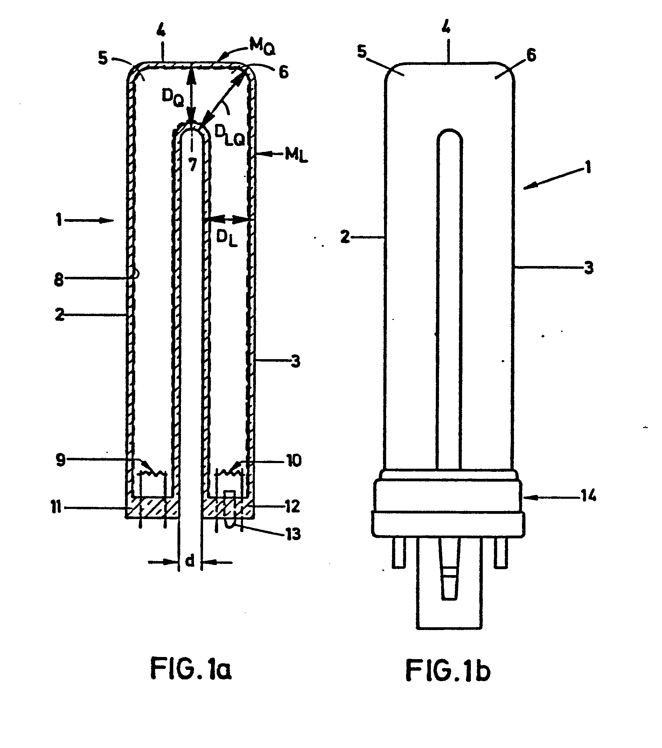

Das in Figur 1a gezeigte rohrförmige Entladungsgefäß 1 besteht aus den beiden Längsrohrabschnitten 2, 3 und dem Querrohrschnitt 4. Die U-förmige Biegung des Entladungsrohres 1 ist so ausgebildet, daß die äußere Mantellinie $M_Q$ des Querrohrabschnittes 4 gerade und im wesentlichen senkrecht zu den äußeren Mantellinien $M_L$ der beiden Längsrohrabschnitte 2, 3 verläuft. Der Durchmesser $D_L$ der jeweiligen Längsrohrabschnitte 2, 3 beträgt 12 mm, wobei der Durchmesser $D_Q$ des Querrohrabschnitts 4 in dessen Mitte so gewählt ist, daß sich ein Verhältnis von $D_Q/D_L$ von etwa 1,2 ergibt. Des weiteren ist der Rohrübergang zwischen den Längsrohrabschnitten 2, 3 und dem Querrohrabschnitt 4 so verlaufend, daß das Verhältnis des Durchmessers $D_{LQ}$ in der jeweiligen Rohrbiegung zum Durchmesser $D_Q$ etwa 1,2 beträgt. Die sich dabei ergebenden kalten Stellen in den äußeren Rohrbiegungen 5, 6 sorgen im Betrieb der Lampe für einen optimalen Quecksilberdampfdruck von etwa 8 - 10 $^3$ mbar. Die innere Rohrbiegung 7 weist einen äußerst kleinen Krümmungsradius auf, so daß der lichte Abstand d zwischen den beiden Längsrohrabschnitten 2, 3 kleiner als 5 mm ist. Trotz eines einstückigen Entladungsrohres 1 ist eine relativ kompakte Lampenkonstruktion erreicht. Die Innenoberfläche des rohrförmigen Entladungsgefäßes 1 ist mit einer Leuchtstoffbeschichtung 8 versehen; es ist ein üblicher Dreibandenstoff verwendet. Zwischen der inneren Gefäßwand des Entladungsrohres 1 und dem Leuchtstoff 8 befindet sich noch eine Schutzschicht aus Siliziumdioxid. An den beiden Enden des Entladungsrohres 1 sind jeweils Elektrodensysteme 9, 10 mittels der Quetschdichtungen 11, 12 eingeschmolzen. Eines der Rohrenden ist mit einem abgeschmolzenen Pumpstengel 13 versehen. Als Füllung enthält das Entladungsgefäß 1 Quecksilber in einer Menge von ca. 10 mg sowie 3 mbar Argon als Zündgas. Die Länge dieser einfach gebogenen U-Lampe beträgt bei einer 9-W-Ausführung ca. 140 mm, während die Gesamtbreite unter 28 mm liegt. U-Lampen anderer Leistungsstufen weisen lediglich andere Längenmaße auf. In Figur 1b ist die Quecksilberdampf-Niederdruckentladungslampe nach Figur 1 mit montiertem Sockel 14 gezeigt (im einzelnen nicht weiter erläutert). Im Innern des Sockels 14 ist noch ein Glimmzünder mit dem entsprechenden Entstörkondensator untergebracht (nicht dargestellt).

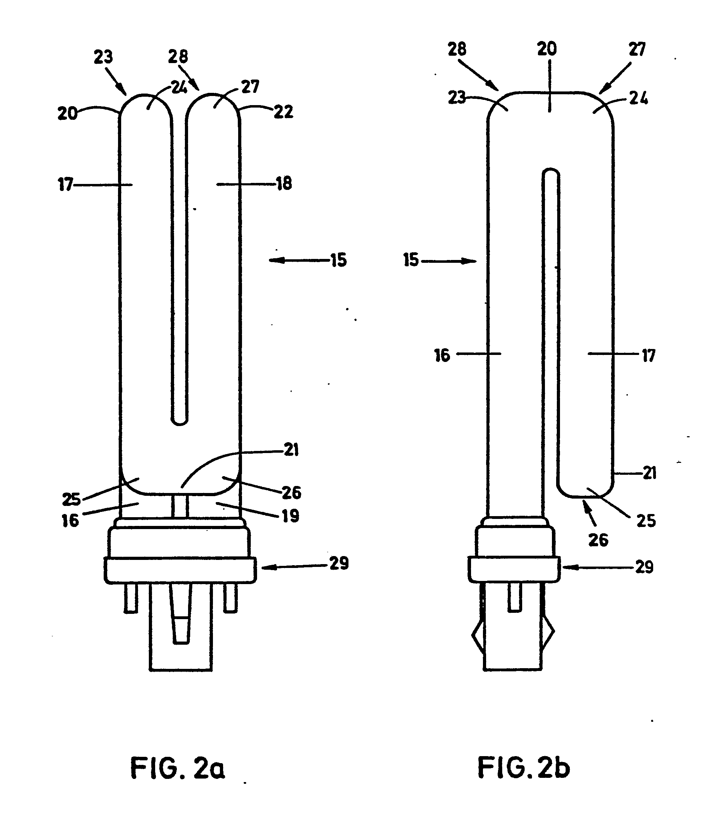

In den Figuren 2a und 2b ist die Ausführungsform einer mehrfach gebogenen Quecksilberdampf-Niederdruckentladungslampe gezeigt, bei der das zunächst U-förmige Entladungsrohr 15 nochmals gefaltet ist. Das Entladungsrohr 15 besteht aus den vier Längsrohrabschnitten 16, 17, 18, 19 und den drei Querrohrabschnitten 20, 21, 22. Die somit vorhandenen drei U-Biegungen sind alle entsprechend der in Figur 1a eingehend beschriebenen U-Biegung ausgebildet und weisen die annähernd rechtwinkligen Biegungsstellen 23, 24, 25, 26, 27, 28 auf.

Die kälteste Stelle des Entladungsgefäßes 15 wird bei dieser Anordnung eine der Biegungsstellen 23, 24, 27, 28 sein. Die Anordnung der Längsrohrabschnitte 16, 17, 18, 19 ist so getroffen, daß diese in den einzelnen Querschnittsebenen die Ecken eines Quadrates durchsto-ßen. Ebenso wäre eine mäanderformige Anordnung der Rohrabschnitte denkbar. Das mehrfach gebogene Entladungsrohr 15 ist an seinen abgedichteten äußeren Enden mit einem Sockelkörper 29 versehen. In den erfindungsgemäßen Merkmalen entspricht die Ausgestaltung dieser Lampe der in Figur 1a und 1b beschriebenen Lampe.

In Figur 3 ist schließlich anhand einer einfach gebogenen U-Lampe entsprechend Figur 1a und 1b das gemessene Temperaturprofil gezeigt, bei senkrechter Brennlage - Sockel unten - und einer Umgebungstemperatur von ca. 25 °C. Hieraus geht klar hervor, daß sich die den Quecksilberdampfdruck im Betrieb der Lampe bestimmenden kalten Stellen direkt in den nahezu rechtwinkligen Rohrbiegungen 5 und 6 befinden, wobei sich eine Temperatur von ca. 40 °C einstellt. Die Temperaturwerte nehmen dann zu den abgedichteten, die Elektroden enthaltenden Enden bis zu 70 °C zu. In der Mitte des Querrohrabschnittes 4 liegt bereits eine gegenüber den kalten Stellen um 5 °C höhere Temperatur (45 °C) vor.

**Patentansprüche**

1. Quecksilberdampf-Niederdruckentladungslampe mit einem Entladungsgefäß (1; 15) aus einem einstückigen, einfach oder mehrfach gebogenen Glasrohr, das aus mehreren geraden, parallel zueinander verlaufenden Längsrohrabschnitten (2, 3; 16, 17, 18, 19) und mindestens einem einzelne Längsrohrabschnitte verbindenden Querrohrabschnitt (4; 20, 21, 22) besteht, wobei die beiden äußeren Enden des Entladungsrohres abgedichtet sind und jeweils Elektrodeneinschmelzungen aufweisen, dadurch gekennzeichnet, daß die äußere Mantellinie $M_Q$ der einzelnen Querrohrabschnitte (4; 20, 21, 22) gerade verläuft, daß der Durchmesser $D_{LQ}$ in den Rohrbiegungen (5, 6; 23, 24, 25, 26, 27, 28) an den Übergängen zwischen den Längsrohrabschnitten (2, 3; 16, 17, 18, 19) und den jeweiligen Querrohrabschnitten (4; 20, 21, 22) größer ist als der Durchmesser $D_Q$ der einzelnen Querrohrabschnitte in deren Mitte, und daß der Durchmesser $D_Q$ der einzelnen Querrohrabschnitte gleich oder größer ist als der Durchmesser $D_L$ der Längsrohrabschnitte, wobei die Durchmesser ($D_{LQ}$, $D_Q$, $D_L$) in der Ebene liegen, die von den äußeren Mantellinien $M_L$ der durch den jeweiligen Querrohrabschnitt (4; 20, 21, 22) verbundenen Längsrohrabschnitte (2,3; 16, 17, 18, 19) aufgespannt ist.

2. Quecksilberdampf-Niederdruckentladungslampe nach Anspruch 1, dadurch gekennzeichnet, daß die äußere Mantellinie $M_Q$ der einzelnen Querrohrabschnitte im wesentlichen senkrecht zu den äußeren Mantellinien $M_L$ der zugehörigen Längsrohrabschnitte verläuft.

3. Quecksilberdampf-Niederdruckentladungslampe nach Anspruch 1 oder 2, dadurch gekennzeichnet, daß das Verhältnis des Durchmessers $D_Q$ der Querrohrabschnitte zum Durchmesser $D_L$ der Längsrohrabschnitte 1,1 bis 1,3 beträgt.

4. Quecksilberdampf-Niederdruckentladungslampe nach einem der Ansprüche 1 bis 3, dadurch gekennzeichnet, daß das Verhaltnis des Durchmessers $D_{LQ}$ an den Rohrübergängen zum Durchmesser $D_Q$ der Querrohrabschnitte etwa 1,2 beträgt.

5. Quecksilberdampf-Niederdruckentladungslampe nach einem der Ansprüche 1 bis 4, dadurch gekennzeichnet, daß der lichte Abstand d zwischen benachbarten, durch einen Querrohrabschnitt verbundenen Längsrohrabschnitten etwa gleich oder kleiner als der halbe Durchmesser $D_L$ dieser Rohrabschnitte ist.

6. Quecksilberdampf-Niederdruckentladungslampe nach einem der Ansprüche 1 bis 5, dadurch gekennzeichnet, daß die Querrohrabschnitte (4; 20, 21, 22) an der nach außen gewandten Mantelfläche - an der äußeren Mantellinie $M_Q$ - in der Mitte eine Delle aufweisen.

7. Quecksilberdampf-Niederdruckentladungslampe nach einem der Ansprüche 1 bis 6, dadurch gekennzeichnet, daß das Entladungsgefäß (1) aus zwei Längsrohrabschnitten (2, 3) und einem diese Längsrohrabschnitte verbindenden Querrohrabschnitt (4) besteht.

8. Quecksilberdampf-Niederdruckentladungslampe nach einem der Ansprüche 1 bis 6, dadurch gekennzeichnet, daß das Entladungsgefäß (15) aus vier Längsrohrabschnitten (16, 17, 18, 19) und drei diese Längsrohrabschnitte verbindenden Querrohrabschnitten (20, 21, 22) besteht.

9. Quecksilberdampf-Niederdruckentladungslampe nach Anspruch 8, dadurch gekennzeichnet, daß die vier Längsrohrabschnitte (16, 17, 18, 19) in den einzelnen Querschnittsebenen die Ecken eines Quadrates durchstoßen, wobei jeweils das erste (16) und das zweite (17) Längsrohr an den den Gefäßabdichtungen entfernten Enden, das zweite (17) und das dritte (18) Längsrohr an den den Gefäßabdichtungen benachbarten Enden und das dritte (18) und das vierte (19) Längsrohr wieder an den den Gefäßabdichtungen entfernten Enden durch den jeweiligen Querrohrabschnitt (20, 21, 22) verbunden sind.

10. Quecksilberdampf-Niederdruckentladungslampe nach einem der Ansprüche 1 bis 9, dadurch gekennzeichnet, daß die außeren Biegungsstellen (5, 6; 23, 24, 25, 26, 27, 28) an den Ubergängen zwischen den Längsrohrabschnitten und den jeweiligen Querrohrabschnitten mit einer Beschichtung versehen sind, die die Wärme im Temperaturbereich größer als 35°C besser als das Glasmaterial des Entladungsgefäßes (1; 15) abstrahlt.

11. Quecksilberdampf-Niederdruckentladungslampe nach einem der Ansprüche 1 bis 10, dadurch gekennzeichnet, daß das Entladungsgefäß (1; 15) im Innern mit Leuchtstoff (8) beschichtet ist.

12. Quecksilberdampf-Niederdruckentladungslampe nach Anspruch 11, dadurch gekennzeichnet, daß sich zwischen der Entladungsgefäßwand und der Leuchtstoffbeschichtung (8) eine Schutzschicht, z.B. aus Siliziumdioxid, befindet.

13. Quecksilberdampf-Niederdruckentladungslampe nach einem der Ansprüche 1 bis 12, dadurch gekennzeichnet, daß die äußeren Enden des rohrförmigen Entladungsgefäßes (1; 15) Quetschabdichtungen (11, 12) aufweisen.

14. Verfahren zur Herstellung einer Quecksilberdampf-Niederdruckentladungslampe nach einem der Ansprüche 1 bis 13, dadurch gekennzeichnet, daß im wesentlichen die folgenden Verfahrensschritte ablaufen:

a) Erwärmen eines zunächst geraden Glasrohres, insbesondere Erwärmen eines Mittelteils auf Erweichungstemperatur;

b) Gegeneinanderbiegen der sich seitlich von dem betreffenden Mittelteil erstreckenden Rohrteile (Längsrohrabschnitte), bis diese parallel zueinander ausgerichtet sind;

c) Einführen des U-förmig gebogenen Teils des Rohres (im wesentlichen der Querrohrabschnitt mit Übergang zu den jeweiligen Längsrohrabschnitten) in eine Form mit gleichzeitigem Einblasen von Gas in das Rohr über die Rohrenden (Formblasen);

d) gegebenenfalls Erwärmen weiterer Mittelteile des Rohres und Gegeneinanderbiegen der sich seitlich von dem jeweiligen Mittelteil erstreckenden Rohrteile (Längsrohrabschnitte), bis diese ebenfalls parallel zueinander ausgerichtet sind;

e) Einführen der gegebenenfalls weiteren U-förmig gebogenen Teile des Rohres (im wesentlichen die Querrohrabschnitte mit Übergang zu den jeweiligen Längsrohrabschnitten) in eine Form mit gleichzeitigem Einblasen von Gas in das Rohr über die Rohrenden (Formblasen);

f) Beschichten der Innenoberfläche des Rohres mit Leuchtstoff ggf. nach vorherigem Aufbringen einer Schutzschicht, z.B. aus Siliziumdioxid;

g) Einführen jeweils eines Elektrodensystems und ggf. eines Pumprohres in die äußeren Rohrenden und Erwärmen der Rohrenden auf Erweichungstemperatur sowie anschließendes Quetschdichten der Enden um die Elektrodenzuführungen und ggf. um das Pumprohr;

h) Pumpen, Spülen und Füllen des Entladungsgefäßes, ggf. über ein vorhandenes Pumprohr.

## Claims:

1. A low-pressure mercury vapour discharge lamp comprising a discharge envelope (1; 15) made of a single piece of glass tube and bent once or several times that consists of several straight, parallel longitudinal tube seciions (2, 3; 16, 17, 18, 19) and at least one transverse tube section (4; 20, 21, 22) connecting individual longitudinal tube sections, with the two outer ends of the discharge tube being sealed and retaining an electrode seal each, characterized in that the outer generating line $M_Q$ of the individual transverse tube sections (4; 20, 21, 22) is straight, the diameter $D_{LQ}$ in the tube bends (5, 6; 23, 24, 25, 26, 27, 28) at the transitions between the longitudinal tube sections (2, 3; 16, 17, 18, 19) and the respective transverse tube sections (4; 20, 21, 22) is larger than the diameter $D_Q$ of the individual transverse tube sections in the middle thereof, and the diameter $D_Q$ of the individual transverse tube sections is as large as or larger than the diameter $D_L$ of the longitudinal tube sections, whereby the diameters ($D_{LQ}$, $D_Q$, $D_L$) lie in the plane which is subtended by the outer generating lines $M_L$ of the longitudinal tube sections (2, 3; 16, 17, 18, 19) connected by the respective transverse tube section (4; 20, 21, 22).

2. A low-pressure mercury vapour discharge lamp as claimed in claim i, characterized in that the outer generating line $M_Q$ of the individual transverse tube sections is substantially perpendicular to the outer generating lines $M_L$ of the associated longitudinal tube sections.

3. A low-pressure mercury vapour discharge lamp as claimed in claims i or 2, characterized in that ihe ratio of the diameter $D_Q$ of the transverse tube sections to the diameter $D_L$ of the longitudinal tube sections is from 1.1 to 1.3.

4. A low-pressure mercury vapour discharge lamp as claimed in one of the claims 1 to 3, characterized in that the ratio of the diameter $D_{LQ}$ at the tube transitions to the diameter $D_Q$ of the transverse tube sections is approximately 1.2.

5. A low-pressure mercury vapour discharge lamp as claimed in one of the claims 1 to 4, characterized in that the clearance d between adjacent longitudinal tube sections connected by a transverse tube section is approximately as large as or smaller than the radius $D_L$ of the said tube sections.

6. A low-pressure mercury vapour discharge lamp as claimed in one of the claims 1 to 5, characterized in that the transverse tube sections (4; 20, 21, 22) are provided with a depression in the middle of the outwardly facing generating line - at the outer generating line $M_Q$.

7. A low-pressure mercury vapour discharge lamp as claimed in one of the claims 1 to 6, characterized in that the discharge envelope (i) comprises two longitudinal tube sections (2, 3) and a transverse tube section (4) connecting these longitudinal tube sections.

8. A low-pressure mercury vapour discharge lamp as claimed in one of the claims i to 6, characterized in that the discharge envelope (15) comprises four longitudinal tube sections (16, 17, 18, 19) and three transverse tube sections (20, 21, 22) connecting these longitudinal tube sections.

9. A low-pressure mercury vapour discharge lamp as claimed in claim 8, characterized in that the four longitudinal tube sections (16, 17, 18, 19) intersect the angles of a square in individual crosssectional planes with, in each case, the first (16) and second (17) longitudinal tubes being connected at the ends remote from the envelope seals, the second (17) and third (18) longitudinal tubes being connected at the ends adjacent the envelope seals, and the third (18) and fourth (19) longitudinal tubes being again connected at the ends remote from the envelope seals by the respective transverse tube sections (20, 21, 22).

10. A low-pressure mercury vapour discharge lamp as claimed in one of the claims 1 to 9, characterized in that the outer corner bends (5, 6; 23, 24, 25, 26, 27, 28) are provided at the transitions between the longitudinal tube sections and the respective transverse tube sections with a coating that dissipates heat in the temperature range above 35°C better than the glass material of the discharge envelope (1; 15).

11. A low-pressure mercury vapour discharge lamp as claimed in one of the claims 1 to 10, characterized in that the discharge vessel (1; 15) is coated on its inside with phosphor (8).

12. A low-pressure mercury vapour discharge lamp as claimed in claim 11, characterized in that a protective coating, e.g., of silicon dioxide, is located between the wall of the discharge envelope and the phosphor coating (8).

13. A low-pressure mercury vapour discharge lamp as claimed in one of the claims 1 to 12, characterized in that the outer ends of the tubular discharge envelope (1; 15) are provided with pinch seals (11, 12).

14. A method of manufacturing a low-pressure mercury vapour discharge lamp as claimed in one of the claims 1 to 13, characterized in that it comprises substantially the following steps:

a) heating an initially straight glass tube, especially heating of an intermediate portion thereof, to softening temperature;

b) bending towards one another the tube sections (longitudinal tube sections) which extend at the sides of the respective intermediate portion until they are aligned parallel to one another;

c) inserting the U-shaped bend portion (substantially the transverse tube section with the transitions to the respective longitudinal tube sections) into a mold while gas is blown into the tube through the tube ends (blow-molding);

d) heating further intermediate portions of the tube and bending towards one another the tube sections (longitudinal tube sections) extending at the sides of the respective intermediate portions until they are also aligned parallel to one anothor.

e) inserting the further U-shaped bend portions of the tube (substantially the transverse tube sections with the transitions to the respective longitudinal tube sections) into a mold while gas is blown into the tube through the tube ends (blow-molding);

f) coating the inner surface of the tube with phosphor subsequent to application of a protective coating of, e.g,, silicon dioxide;

g) inserting electrode systems and an exhaust tube into the outer tube ends and heating the tube ends to softening temperature as well as subsequent pinch sealing of the ends about the electrode inleads and the exhaust tube;

h) exhausting, flushing and filling of the discharge envelope through the exhaust tube.

## Revendications

1. Lampe à vapeur de mercure à décharge basse pression comportant un récipient de décharge (1,15) en un tube de verre en une seule pièce courbé simplement ou de façon multiple, qui est constitué par plusieurs sections longitudinales de tube rectilignes et s'étendant parallèlement les unes aux autres (2, 3; 16, 17, 18, 19) et par au moins une section transversale de tube (4; 20, 21, 22) reliant des sections longitudinales individuelles de tube, les deux extrémités externes du tube de décharge étant étanchéifiées et présentant des scellements respectifs d'étanchéité d'électrodes, lampe caractérisée en ce que la génératrice externe $M_Q$ des sections individuelles transversales de tube (4; 20, 21, 22) s'étend en ligne droite, en ce que le diamètre $D_{LQ}$ dans les courbures de tube (5, 6; 23, 24, 25, 26, 27, 28) est plus grand aux transitions entre les sections longitudinales de tube (2, 3; 16, 17, 18, 19) et les sections respectives transversales de tube (4; 20, 21, 22) que le diamètre $D_Q$ des sections individuelles transversales de tube en leur milieu, et en ce que le diamètre $D_Q$ des sections individuelles transversales de tube est égal à ou plus grand que le diamètre $D_L$ des sections longitudinales de tube, les diamètres ($D_{LQ}$, $D_Q$, $D_L$) sont situés dans le plan qui est fixé par les génératrices externes $M_L$ des sections longitudinales de tube (2, 3; 16, 17, 18, 19) reliées par la section respective transversale de tube (4; 20, 21, 22).

2. Lampe à vapeur de mercure à décharge basse pression selon la revendication 1, caractérisée en ce que la génératrice externe $M_Q$ des sections individuelles transversales de tube s'étend sensiblement perpendiculairement aux génératrices externes $M_L$ des sections longitudinales correspondantes de tube.

3. Lampe à vapeur de mercure à décharge basse pression selon la revendication 1 ou la revendication 2, caractérisée en ce que le rapport entre le diamètre $D_Q$ des sections transversales de tube et le diamètre $D_L$ des sections longitudinales de tube est de 1,1 à 1,3.

4. Lampe à vapeur de mercure à décharge basse pression selon l'une des revendications 1 à 3, caractérisée en ce que le rapport entre le diamètre $D_{LQ}$ aux transitions de tube et le diamètre $D_Q$ des sections transversales de tube est d'environ 1,2.

5. Lampe à vapeur de mercure à décharge basse pression selon l'une des revendications 1 à 4, caractérisée en ce que la distance intérieure d entre des sections longitudinales de tube voisines reliées par une section transversale de tube est à peu près égale à ou plus petite que le demi-diamètre $D_L$ de ces sections de tube.

6. Lampe à vapeur de mercure à décharge basse pression selon l'une des revendications 1 à 5, caractérisée en ce que les sections transversales de tube (4; 20, 21, 22) sur la face enveloppe tournée vers l'extérieur présentent, sur la génératrice externe $M_Q$, au milieu une déformation.

7. Lampe à vapeur de mercure à décharge basse pression selon l'une des revendications 1 à 6, caractérisée en ce que le récipient de décharge (1) est constitué par deux sections longitudinales de tube (2, 3) et par une section transversale de tube (4) reliant ces sections longitudinales de tube.

8. Lampe à vapeur de mercure à décharge basse pression selon l'une des revendications 1 à 6, caractérisée en ce que le récipient de décharge (15) est constitué par quatre sections longitudinales de tube (16, 17, 18, 19) et par trois sections transversales de tube (20, 21, 22) reliant ces sections longitudinales de tube.

9. Lampe à vapeur de mercure à décharge basse pression selon la revendication 8, caractérisée en ce que les quatre sections longitudinales de tube (16, 17, 18, 19) dans les plans individuels de sections transversales passent à travers les coins d'un carré, le premier (16) et le second (17) tubes longitudinaux respectifs étant alors reliés sur les extrémités éloignées des joints du récipient, le deuxième (17) et le troisième (18) tubes longitudinaux sur les extrémités voisines des joints du récipient et le troisième (18) et le quatrième (19) tubes longitudinaux à nouveau sur les extrémités éloignées des joints du récipient par la section transversale respective de tube (20, 21, 22).

10. Lampe à vapeur de mercure à décharge basse pression selon l'une des revendications 1 à 9, caractérisée en ce que les emplacements externes de courbure (5, 6; 23, 24, 25, 26, 27, 28) sont munis, aux transitions entre les sections longitudinales de tube et les sections respectives transversales de tube, d'un revêtement qui rayonne la chaleur dans une gamme de températures supérieure à 35°C mieux que la matière du type verre du récipient de décharge (1; 15).

11. Lampe à vapeur de mercure à décharge basse pression selon l'une des revendications 1 à 10, caractérisée en ce que le récipient de décharge (1; 15) est recouvert à l'intérieur d'une substance luminescente (8).

12. Lampe à vapeur de mercure à décharge basse pression selon la revendication 11, caractérisée en ce que, entre la paroi du récipient de décharge et la couche de substance luminescente (8) se trouve une couche de protection, par exemple, en dioxyde de silicium.

13. Lampe à vapeur de mercure à décharge basse pression selon l'une des revendications 1 à 12, caractérisée en ce que les extrémités externes du récipient tubulaire de décharge (1; 15) présentent des scellements écrasés (11, 12).

14. Procédé pour fabriquer une lampe à vapeur de mercure à décharge basse pression selon l'une des revendications 1 à 13, caractérisé en ce que les étapes de procédés suivantes se déroulent essentiellement:

a) chauffage d'un tube en verre tout d'abord rectiligne en particulier chauffage d'une partie centrale à une température de ramollissement;

b) courbage les unes contre les autres des parties de tube (sections longitudinales de tube) s'étendant latéralement de la partie centrale correspondante jusqu'à ce que celles-ci soient orientées en parallèle les unes aux autres.

c) introduction de la partie courbée en forme de U du tube (essentiellement la section transversale de tube avec une transition vers les sections respectives longitudinales de tube) dans un moule avec soufflage simultané de gaz dans le tube sur les extrémités du tube (soufflage en moule);

d) éventuel chauffage d'autres parties centrales du tube et courbage les unes contre les autres de parties de tube (sections longitudinales de tube) s'étendant latéralement depuis la partie centrale respective, jusqu'à ce qu'elles soient également parallèles les unes aux autres;

e) introduction des autres parties éventuelles du tube, courbées en forme de U, (essentiellement les sections transversales de tube avec transition vers les sections longitudinales respectives de tube) dans un moule avec soufflage simultané de gaz dans le tube sur les extrémités de tube (soufflage en moule);

f) application sur la surface interne du tube de substance luminescente, éventuellement après placement préalable d'une couche de protection par exemple, en dioxyde de silicium;

g) introduction d'un système respectif d'électrodes et éventuellement d'un tube de pompage dans les extrémités extérieures du tube et chauffage des extrémités du tube à la température de ramollissement ainsi qu'ensuite scellement par ècrasement des extrémités autour des arrivées d'èlectrodes et éventuellement autour du tube de pompage;

h) pompage, rinçage et remplissage du récipient de décharge éventuellement par un tube de pompage disponible.

FIG.1a          FIG.1b

FIG. 2a

FIG. 2b

FIG.3